# FASCICULE DE BREVET EUROPEEN

(11) **EP 2 359 696 B1**
(45) Date de publication et mention de la délivrance du brevet: **16.08.2017**
(21) Numéro de dépôt: 11305157.7
(22) Date de dépôt: 15.02.2011
(51) Int. Cl.: A23C 9/12

(54) **Dispositif de chauffage d'aliments en portions séparées pour la préparation d'un nombre variable de portions**
Vorrichtung zum Erhitzen von Lebensmitteln in getrennten Portionen zur Zubereitung einer wechselnden Anzahl von Portionen
Device for heating food products in separate portions in order to prepare a variable number of portions

(30) Priorité: 16.02.2010 FR 1051091
(43) Date de publication de la demande: 24.08.2011
(73) Titulaire: SEB S.A., 69130 Ecully (FR)
(72) Inventeur: Astegno, Jean-Paul, 64420 Espoey (FR); Charles, Patrick, 65290 Louey (FR); Lacourpaille , Gérard, 65380 Ossun (FR)
(74) Mandataire: Cémeli, Eric Philippe Laurent

(56) Documents cités:
- WO-A1-03/071909
- DE-A1-102007 059 883
- FR-A- 954 793
- US-A- 1 958 978
- US-A- 3 122 135
- US-A- 4 009 368
- A Best Kitchen: "Double Dip Server", , 8 January 2010 (2010-01-08), XP055046057, Retrieved from the Internet: URL:http://www.akitchen.com/store/dipping- server.html [retrieved on 2012-11-29]
- Server Products: "Double Dip Server-Manual", , 20 March 2009 (2009-03-20), XP055046034, Retrieved from the Internet: URL:http://titan54display.server-products. com/Public/manuals/01851.pdf [retrieved on 2012-11-29]

## Description

La présente invention concerne le domaine technique des dispositifs de chauffage d'aliments en portions séparées.

La présente invention concerne notamment les dispositifs prévus pour préparer des yaourts, des faisselles, des crèmes dessert, ou encore pour cuire des verrines.

Le document US 2008/206437 divulgue un dispositif de chauffage d'aliments en portions séparées comportant un support monté amovible dans une cuve. Un récipient associé à un couvercle est inséré dans une ouverture centrale du support. Le support comporte une série d'autres ouvertures entourant l'ouverture centrale, dans lesquelles sont insérés d'autres récipients. Les autres récipients sont dépourvus de couvercle. Le support comporte de plus plusieurs passages entre les ouvertures précitées. Ainsi le contenu des autres récipients peut être exposé à la vapeur issue de la cuve.

Cette disposition est défavorable pour certaines préparations culinaires telles que les yaourts, les faisselles ou les crèmes dessert, usuellement effectuées dans des récipients dépourvus de couvercle, les couvercles étant utilisés ultérieurement pour la conservation. Il peut également être intéressant de cuire à la vapeur ou au bain marie des verrines de légumes, de fruits, de poisson, de viande, en protégeant le contenu des verrines d'une atmosphère trop humide, sans pour autant fermer ces verrines avec un couvercle.

Un appareil selon le préambule de la revendication 1 est connu du document WO 03/071909.

L'objet de la présente invention est d'améliorer les possibilités de réalisation de préparations culinaires dans un dispositif de chauffage d'aliments en portions séparées comportant des récipients présentant une face inférieure exposée à une ambiance chaude et une face supérieure contenant les aliments exposée à une ambiance plus froide et/ou davantage protégée de l'humidité.

Cet objet est atteint avec un dispositif de chauffage d'aliments en portions séparées comportant une cuve recevant un support monté amovible, ainsi que des récipients prévus pour être insérés dans des ouvertures du support, un premier récipient inséré dans une première ouverture du support couvrant alors ladite première ouverture, un deuxième récipient inséré dans une deuxième ouverture du support couvrant alors ladite deuxième ouverture, le premier récipient comportant une première collerette annulaire prévue pour reposer sur le support, le deuxième récipient comportant une deuxième collerette annulaire prévue pour reposer sur le support, la première collerette annulaire étant formée dans la partie supérieure du premier récipient et la deuxième collerette annulaire étant formée dans la partie supérieure du deuxième récipient, un premier couvercle étant associé au premier récipient, du fait que la cuve forme une enceinte confinée avec le support portant les récipients insérés dans les ouvertures, que l'enceinte reste confinée lorsque le premier couvercle couvre la deuxième ouverture à la place du deuxième récipient, que la deuxième ouverture est entourée par une deuxième nervure supérieure, et que le premier couvercle est réalisé en matière souple et comporte une bordure annulaire inférieure prévue pour entourer la deuxième nervure supérieure et pour entourer la première collerette annulaire. Le dispositif de chauffage d'aliments en portions séparées proposé permet de réaliser simultanément deux préparations, par exemple deux yaourts, en utilisant le premier récipient et le deuxième récipient. Toutefois, lorsque le deuxième récipient n'est pas disponible, par exemple du fait que la préparation contenue dans le deuxième récipient n'a pas encore été consommée, l'utilisateur peut placer le premier couvercle sur le support à la place du deuxième récipient et utiliser le premier récipient pour réaliser une préparation, par exemple un yaourt. Le premier couvercle disposé sur le support permet de limiter ou d'éviter les déperditions de calories et/ou de vapeur par la deuxième ouverture du support. Des conditions de fonctionnement comparables peuvent ainsi être obtenues en présence de tous les récipients ou en l'absence du deuxième récipient, l'enceinte restant confinée. L'utilisateur n'a pas besoin d'attendre la disponibilité du deuxième récipient pour pouvoir réaliser une autre préparation. Le dispositif de chauffage d'aliments en portions séparées proposé présente une capacité variable. Ces dispositions permettent de simplifier la construction et l'utilisation dudit dispositif de chauffe d'aliments. Ces dispositions permettent d'éviter les phénomènes de coincement entre le support et le premier récipient ou le deuxième récipient. Ces dispositions permettent également de limiter ou d'éviter les déperditions de calories et/ou de vapeur par la première ouverture et par la deuxième ouverture du support. Ces dispositions permettent aussi d'agencer la plus grande partie du premier récipient et du deuxième récipient dans la cuve sous le support.

Avantageusement alors, l'enceinte reste confinée lorsqu'un deuxième couvercle associé au deuxième récipient couvre la première ouverture à la place du premier récipient. Cette disposition permet de simplifier l'utilisation du dispositif de chauffage d'aliments en portions séparées, du fait qu'une préparation peut être réalisée dans le premier récipient en l'absence du deuxième récipient, et qu'une préparation peut être réalisée dans le deuxième récipient en l'absence du premier récipient.

Avantageusement alors, le premier couvercle peut être associé au deuxième récipient, et le deuxième couvercle peut être associé au premier récipient. En d'autres termes, le premier récipient et le deuxième récipient, d'une part, le premier couvercle et le deuxième couvercle, d'autre part, sont interchangeables. Ainsi le premier couvercle est susceptible de couvrir la première ouverture à la place du premier récipient, et le deuxième couvercle est susceptible de couvrir la deuxième ouverture à la place du deuxième récipient, l'enceinte restant alors confinée. Cette disposition permet de faciliter encore davantage la construction et l'utilisation du dispositif de chauffage d'aliments en portions séparées.

Avantageusement encore, le support comporte deux organes de préhension agencés de manière opposée. Cette disposition permet de faciliter le déplacement du support lorsque le premier récipient ou le deuxième récipient ne sont pas utilisés pour réaliser une préparation.

Avantageusement encore, le premier récipient en place dans la première ouverture s'étend en dessous du support. Cette disposition permet de faciliter l'extraction du premier récipient hors du support.

Avantageusement encore, la première ouverture est entourée par une première nervure supérieure. Cette disposition permet d'éviter l'écoulement des condensats dans le premier récipient ou le deuxième récipient lorsque le premier couvercle ou le deuxième couvercle ne sont pas disposés sur le premier récipient ou le deuxième récipient. Le premier récipient peut ainsi reposer sur la première nervure supérieure et le deuxième récipient sur la deuxième nervure supérieure.

Avantageusement alors, la première collerette annulaire est prévue pour reposer sur la première nervure supérieure et la deuxième collerette annulaire est prévue pour reposer sur la deuxième nervure supérieure. Cette disposition permet d'éviter les phénomènes de coincement précités ainsi que les écoulements de condensats précités, avec une construction simplifiée.

Avantageusement alors, la première collerette annulaire est formée par le bord supérieur du premier récipient et la deuxième collerette annulaire est formée par le bord supérieur du deuxième récipient. Cette disposition permet de simplifier la réalisation du premier récipient et du deuxième récipient, et aussi de faciliter le nettoyage du premier récipient et du deuxième récipient en limitant les surfaces extérieures concaves.

Avantageusement encore, la bordure annulaire inférieure est prévue pour entourer la première nervure supérieure. Cette disposition permet de mieux obturer la première ouverture. En alternative ou en complément, le premier couvercle est prévu pour reposer sur la première nervure supérieure.

Selon un mode de réalisation avantageux, le dispositif de chauffage d'aliments en portions séparées comporte des moyens de chauffe associés à la cuve. Cette disposition permet de faciliter le contrôle de la température des aliments disposés dans le premier récipient et dans le deuxième récipient. Notamment, cette disposition permet de faciliter la réalisation de yaourts.

Avantageusement alors, les moyens de chauffe sont associés à des moyens de régulation de température. Cette disposition permet d'obtenir une température plus précise pour la préparation des aliments.

Selon un mode de réalisation avantageux, le dispositif de chauffage d'aliments en portions séparées comporte un couvercle principal couvrant le support. Cette disposition permet de mieux contrôler la température dans l'espace situé entre le support et le couvercle principal, au dessus du premier récipient et du deuxième récipient.

Avantageusement alors, le couvercle principal repose sur le support. Cette disposition permet de simplifier la construction du dispositif de chauffage d'aliments en portions séparées. En alternative, le couvercle principal pourrait notamment reposer sur la cuve.

L'invention sera mieux comprise à l'étude d'un exemple de réalisation, pris à titre nullement limitatif, illustré dans les figures annexées, dans lesquelles :
- la figure 1 illustre un appareil électroménager de préparation culinaire formant un dispositif de chauffage d'aliments en portions séparées selon l'invention, représenté en éclaté,
- la figure 2 montre une vue en coupe d'un accessoire de préparation et de conservation du dispositif de chauffage d'aliments en portions séparées illustré sur la figure 1, comportant un récipient fermé par un couvercle,
- la figure 3 montre une vue en coupe d'un autre accessoire de préparation et de conservation du dispositif de chauffage d'aliments en portions séparées illustré sur la figure 1, comportant un récipient fermé par un couvercle,
- la figure 4 montre une vue en coupe partielle d'une première configuration d'utilisation de l'appareil illustré sur la figure 1, correspondant à une utilisation de l'appareil avec l'ensemble des récipients,
- la figure 5 montre une vue en coupe partielle d'une deuxième configuration d'utilisation de l'appareil illustré sur la figure 1, correspondant à une utilisation de l'appareil avec une partie seulement des récipients.

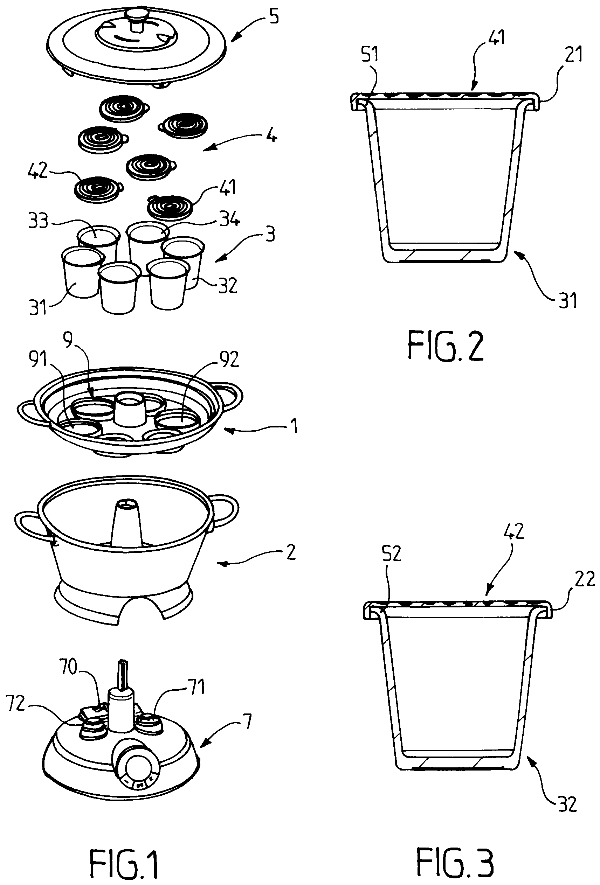

La figure 1 illustre un appareil électroménager de préparation culinaire formant un dispositif de chauffage d'aliments en portions séparées comportant une cuve 2 recevant un support 1 monté amovible, ainsi que des récipients 3 prévus pour être insérés dans des ouvertures 9 du support 1. Les récipients 3 sont associés à des couvercles 4. Chacun des récipients 3 est prévu pour être inséré dans l'une des ouvertures 9. Les récipients 3 sont avantageusement réalisés en verre. Chacun des récipients 3 est prévu pour être fermé par un des couvercles 4. Les couvercles 4 sont de préférence réalisés en matière souple, par exemple en silicone.

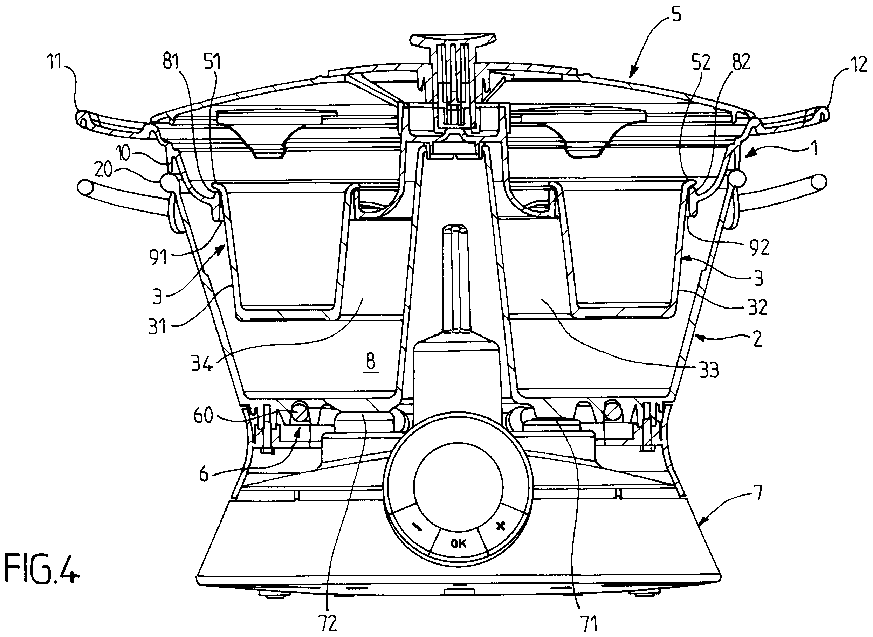

Le dispositif de chauffage d'aliments en portions séparées comporte un couvercle principal 5 couvrant le support 1. Tel que représenté sur les figures 3 et 4, le couvercle principal 5 repose sur le support 1.

Le dispositif de chauffage d'aliments en portions séparées comporte des moyens de chauffe 6 associés à la cuve 2. Tel que représenté sur les figures 3 et 4, les moyens de chauffe 6 sont formés par un élément chauffant blindé 60 disposé sous la cuve 2.

Le dispositif de chauffage d'aliments en portions séparées comporte un boîtier 7 prévu pour alimenter électriquement les moyens de chauffe 6. La cuve 2 est montée amovible sur le boîtier 7. Le boîtier 7 présente des connecteurs 70 prévus pour alimenter l'élément chauffant blindé 60 lorsque la cuve 2 repose sur le boîtier 7.

Les moyens de chauffe 6 sont associés à des moyens de régulation de température. Les moyens de régulation de température sont avantageusement agencés dans le boîtier 7. Tel que visible sur les figures 1, 3 et 4, le boîtier 7 porte un palpeur 71 prévu pour venir en contact avec la cuve 2. Un capteur de température associé aux moyens de régulation de température est logé dans le palpeur 71. Le boîtier 7 porte un autre palpeur 72 prévu pour venir en contact avec la cuve 2. Un fusible thermique est logé dans l'autre palpeur 72.

Le support 1 comporte deux organes de préhension 11, 12 agencés de manière opposée. Les organes de préhension 11, 12 s'étendent entre le couvercle principal 5 et un bord supérieur 20 de la cuve 2.

Le support 1 est imperforé à l'exception des ouvertures 9. Tel que représenté sur la figure 4, les récipients 3 en place dans les ouvertures 9 s'étendent en dessous du support 1.

Le support 1 comporte une paroi annulaire inférieure 10 prévue pour reposer sur la cuve 2. Tel que représenté sur la figure 4, la paroi annulaire inférieure 10 du support 1 repose sur le bord supérieur 20 de la cuve 2.

Ainsi lorsque les récipients 3 sont insérés dans les ouvertures 9 et que le support 1 est disposé sur la cuve 2, la cuve 2 forme une enceinte 8 confinée avec le support 1 portant les récipients 3 insérés dans les ouvertures 9. L'enceinte 8 confinée n'est toutefois pas nécessairement hermétiquement close et peut laisser échapper un peu de vapeur, par exemple du fait des jeux entre les récipients 3 et le support 1. La partie inférieure des récipients 3 agencée dans l'enceinte 8 confinée facilite l'obtention d'une température homogène autour de ladite partie inférieure des récipients 3. Les moyens de régulation de température sont de préférence prévus pour maintenir dans l'enceinte 8 une température comprise entre 40 et 90°C, selon le type de la préparation à réaliser. Si désiré, le boîtier 7 peut porter des moyens de commande aptes à sélectionner plusieurs niveaux de température dans l'enceinte 8 et/ou plusieurs programmes de cuisson et/ou de fermentation.

La figure 4 illustre une configuration d'utilisation dans laquelle tous les récipients 3 sont utilisés pour réaliser des préparations. Parmi les six récipients 3 représentés sur la figure 1, un premier récipient 31, un deuxième récipient 32, un troisième récipient 33 et un quatrième récipient 34 sont visibles sur la figure 4. Parmi les six ouvertures 9 du support 1 visibles sur la figure 1, une première ouverture 91 et une deuxième ouverture 92 sont visibles sur la figure 4. Dans cette configuration d'utilisation, les six couvercles 4 représentés sur la figure 1 sont utilisés seulement après la réalisation de la préparation, pour couvrir les récipients 3. Chacun des récipients 3 est associé à l'un des couvercles 4. Ainsi un premier couvercle 41 est associé au premier récipient 31 ; un deuxième couvercle 42 est associé au deuxième récipient 32, et ainsi de suite. La figure 2 illustre le premier couvercle 41 en place sur le premier récipient 31 ; la figure 3 illustre le deuxième couvercle 42 en place sur le deuxième récipient 32.

Les récipients 3 insérés dans les ouvertures 9 du support 1 couvrent lesdites ouvertures 9. Les récipients 3 insérés dans les ouvertures 9 du support 1 ne sont toutefois pas nécessairement parfaitement ajustés avec le support 1, notamment lorsque les récipients 3 sont réalisés en verre.

Le premier récipient 31 est prévu pour être inséré dans la première ouverture 91 du support 1, tel que visible sur la figure 4. Le premier récipient 31 inséré dans la première ouverture 91 du support 1 couvre la première ouverture 91. Le premier récipient 31 en place dans la première ouverture 91 s'étend en dessous du support 1.

Plus particulièrement, le premier récipient 31 comporte une première collerette annulaire 51 prévue pour reposer sur le support 1. La première collerette annulaire 51 est formée dans la partie supérieure du premier récipient 31. Tel que visible sur les figures 1 à 4, la première collerette annulaire 51 est formée par le bord supérieur du premier récipient 31. La première ouverture 91 est entourée par une première nervure supérieure 81. La première collerette annulaire 51 est prévue pour reposer sur la première nervure supérieure 81.

Le deuxième récipient 32 est prévu pour être inséré dans la deuxième ouverture 92 du support 1. Le deuxième récipient 32 inséré dans la deuxième ouverture 92 du support 1 couvre alors la deuxième ouverture 92. Le deuxième récipient 32 en place dans la deuxième ouverture 92 s'étend en dessous du support 1.

Plus particulièrement, le deuxième récipient 32 comporte une deuxième collerette annulaire 52 prévue pour reposer sur le support 1. La deuxième collerette annulaire 52 est formée dans la partie supérieure du deuxième récipient 32. Tel que visible sur les figures 1 à 3, la deuxième collerette annulaire 52 est formée par le bord supérieur du deuxième récipient 32. La deuxième ouverture 92 est entourée par une deuxième nervure supérieure 82. La deuxième collerette annulaire 52 est prévue pour reposer sur la deuxième nervure supérieure 82.

Le dispositif de chauffage d'aliments en portions séparées peut être utilisé même lorsque l'un des récipients 3 n'est pas disponible, par exemple parce que ledit récipient 3 contenant une préparation telle qu'un yaourt est placé dans un réfrigérateur.

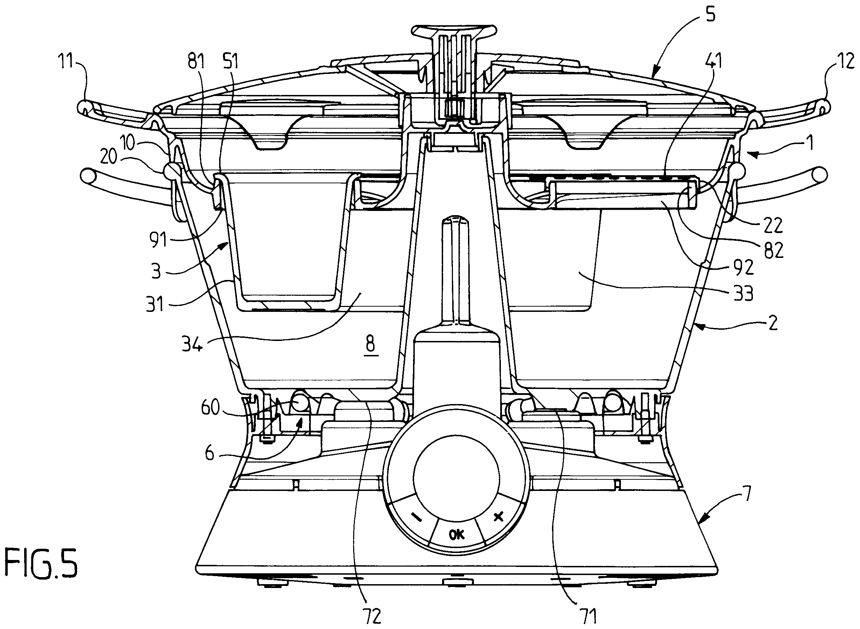

La figure 5 illustre une configuration d'utilisation dans laquelle le deuxième récipient 32 n'est pas disponible. Le premier couvercle 41 est alors utilisé pour confiner l'enceinte 8 à la place du deuxième récipient 32 non disponible. L'enceinte 8 reste confinée lorsque le premier couvercle 41 couvre la deuxième ouverture 92 à la place du deuxième récipient 32. Le premier couvercle 41, réalisé en matière souple, par exemple en silicone, comporte une bordure annulaire inférieure 21 prévue pour entourer la deuxième nervure supérieure 82.

De préférence, le deuxième couvercle 42 est susceptible de couvrir la première ouverture 91 à la place du premier récipient 31. L'enceinte 8 reste confinée lorsque le deuxième couvercle 42 associé au deuxième récipient 32 couvre la première ouverture 91 à la place du premier récipient 31. Le deuxième couvercle 42, réalisé en matière souple, par exemple en silicone, comporte une bordure annulaire inférieure prévue pour entourer la deuxième nervure supérieure 82.

Avantageusement, le premier récipient 31 et le deuxième récipient 32 sont interchangeables, et le premier couvercle 41 et le deuxième couvercle 42 sont interchangeables. Ainsi le premier couvercle 41 peut être associé au deuxième récipient 32, et le deuxième couvercle 42 peut être associé au premier récipient 31. Le premier couvercle 41 est alors susceptible de couvrir la première ouverture 91 à la place du premier récipient 31, et le deuxième couvercle 42 est susceptible de couvrir la deuxième ouverture 92 à la place du deuxième récipient 32. Ainsi le premier couvercle 41 et le deuxième couvercle 42 comportent une bordure annulaire inférieure 21, 22 prévue pour entourer la première nervure supérieure 81 et/ou la deuxième nervure supérieure 82.

Selon un mode de réalisation préféré, tous les récipients 3 sont interchangeables et peuvent être insérés indifféremment dans n'importe laquelle des ouvertures 9, chacun des couvercles 4 pouvant être associé indifféremment à n'importe lequel des récipients 3. Avantageusement encore, tous les récipients 3 sont identiques ; avantageusement encore, tous les couvercles 4 sont identiques.

L'appareil selon l'invention s'utilise et fonctionne de la manière suivante.

Lorsque l'utilisateur veut réaliser des préparations dans tous les récipients 3, l'utilisateur dispose les récipients 3 dans les ouvertures 9 du support 1, place le support 1 sur la cuve 2 préalablement remplie de la quantité d'eau souhaitée, met en place le couvercle principal 5 sur le support 1, et met en marche l'appareil pour alimenter électriquement les moyens de chauffe 6.

Lorsqu'un nombre de récipients 3 compris entre un et la partie entière de la moitié du nombre total de récipients 3 n'est pas disponible, l'utilisateur dispose sur le support 1 un ou plusieurs des couvercles 4 associés aux autres récipients 3 à la place des récipients 3 non disponibles. Dans l'exemple de réalisation illustré sur les figures 1 à 4, le nombre de récipients 3 non disponibles peut être compris entre un et trois. L'utilisateur peut ainsi utiliser simultanément entre trois et six récipients 3 pour réaliser les préparations souhaitées. Tel que représenté sur la figure 5, le deuxième récipient 32 n'est pas disponible. L'utilisateur dispose sur le support 1 le premier couvercle 41 associé au premier récipient 31 à la place du deuxième récipient 32 non disponible.

Le présent dispositif de chauffage d'aliments en portions séparées permet ainsi de faire cuire ou fermenter en ambiance humide un nombre variable de préparations, notamment des yaourts, des faisselles, ou encore des crèmes dessert, directement dans des verrines, tout en préservant la surface des préparations d'un contact direct avec une ambiance humide. Le présent dispositif permet également d'éviter que les verrines soient en contact direct avec une cuve chauffante, qui pourrait nuire à la réalisation des préparations. A titre de variante, le dispositif de chauffage d'aliments en portions séparées ne comporte pas nécessairement six couvercles 4 et six récipients 3 prévus pour être insérés dans six ouvertures 9. Le dispositif de chauffage d'aliments en portions séparées peut comporter au moins deux couvercles 4 et deux récipients 3 prévus pour être insérés dans deux ouvertures 9. Le nombre de couvercles 4, de récipients 3 et d'ouvertures 9 est avantageusement compris entre deux et vingt, et de préférence compris entre quatre et seize.

A titre de variante, le support 1 disposé sur la cuve 2 ne repose pas nécessairement sur le bord supérieur 20 de la cuve 2. Le support 1 peut notamment reposer à l'intérieur de la cuve 2.

A titre de variante, le couvercle principal 5 ne repose pas nécessairement sur le support 1. Le couvercle principal 5 pourrait notamment reposer sur la cuve 2 lorsque le support 1 est en place sur la cuve 2 ou dans la cuve 2.

A titre de variante, les moyens de chauffe 6 ne sont pas nécessairement solidaires de la cuve 2, mais pourraient notamment être montés sur le boîtier 7.

A titre de variante, le dispositif de chauffage d'aliments en portions séparées ne comporte pas nécessairement des moyens de chauffe. La cuve 2 peut alors être chauffée par des moyens de chauffe indépendants du dispositif de chauffage d'aliments en portions séparées.

La présente invention n'est nullement limitée à l'exemple de réalisation décrit et à ses variantes, mais englobe de nombreuses modifications dans le cadre des revendications.

## Revendications

1. Dispositif de chauffage d'aliments en portions séparées comportant une cuve (2) recevant un support (1) monté amovible, ainsi que des récipients (3) prévus pour être insérés dans des ouvertures (9) du support (1), un premier récipient (31) inséré dans une première ouverture (91) du support (1) couvrant alors ladite première ouverture (91), un deuxième récipient (32) inséré dans une deuxième ouverture (92) du support (1) couvrant alors ladite deuxième ouverture (92), le premier récipient (31) comportant une première collerette annulaire (51) prévue pour reposer sur le support (1), le deuxième récipient (32) comportant une deuxième collerette annulaire (52) prévue pour reposer sur le support (1), la première collerette annulaire (51) étant formée dans la partie supérieure du premier récipient (31) et la deuxième collerette annulaire (52) étant formée dans la partie supérieure du deuxième récipient (32), un premier couvercle (41) étant associé au premier récipient (31), **caractérisé en ce que** la cuve (2) forme une enceinte (8) confinée avec le support (1) portant les récipients (3) insérés dans les ouvertures (9), **en ce que** l'enceinte (8) reste confinée lorsque le premier couvercle (41) couvre la deuxième ouverture (92) à la place du deuxième récipient (32), **en ce que** la deuxième ouverture (92) est entourée par une deuxième nervure supérieure (82), et **en ce que** le premier couvercle (41) est réalisé en matière souple et comporte une bordure annulaire inférieure (21) prévue pour entourer la deuxième nervure supérieure (82) et pour entourer la première collerette annulaire (51).

2. Dispositif de chauffage d'aliments en portions séparées selon la revendication 1, **caractérisé en ce que** l'enceinte (8) reste confinée lorsqu'un deuxième couvercle (42) associé au deuxième récipient (32) couvre la première ouverture (91) à la place du premier récipient (31).

3. Dispositif de chauffage d'aliments en portions séparées selon la revendication 2, **caractérisé en ce que** le premier couvercle (41) peut être associé au deuxième récipient (32), et **en ce que** le deuxième couvercle (42) peut être associé au premier récipient (31).

4. Dispositif de chauffage d'aliments en portions séparées selon l'une des revendications 1 à 3, **caractérisé en ce que** le support comporte deux organes de préhension (11, 12) agencés de manière opposée.

5. Dispositif de chauffage d'aliments en portions séparées selon l'une des revendications 1 à 4, **caractérisé en ce que** le premier récipient (31) en place dans la première ouverture (91) s'étend en dessous du support (1).

6. Dispositif de chauffage d'aliments en portions séparées selon l'une des revendications 1 à 5, **caractérisé en ce que** la première ouverture (91) est entourée par une première nervure supérieure (81).

7. Dispositif de chauffage d'aliments en portions séparées selon la revendication 6, **caractérisé en ce que** la première collerette annulaire (51) est prévue pour reposer sur la première nervure supérieure (81) et la deuxième collerette annulaire (52) est prévue pour reposer sur la deuxième nervure supérieure (82).

8. Dispositif de chauffage d'aliments en portions séparées selon l'une des revendications 6 ou 7, **caractérisé en ce que** la bordure annulaire inférieure (21) est prévue pour entourer la première nervure supérieure (81).

9. Dispositif de chauffage d'aliments en portions séparées selon l'une des revendications 1 à 8, **caractérisé en ce qu'**il comporte des moyens de chauffe (6) associés à la cuve (2).

10. Dispositif de chauffage d'aliments en portions séparées selon la revendication 9, **caractérisé en ce que** les moyens de chauffe (6) sont associés à des moyens de régulation de température.

11. Dispositif de chauffage d'aliments en portions séparées selon l'une des revendications 1 à 10, **caractérisé en ce qu'**il comporte un couvercle principal (5) couvrant le support (1).

12. Dispositif de chauffage d'aliments en portions séparées selon la revendication 11, **caractérisé en ce que** le couvercle principal (5) repose sur le support (1).

## Patentansprüche

1. Vorrichtung zum Erwärmen von Lebensmitteln in getrennten Teilen, die einen Tank (2) umfasst, der einen Träger (1), der abnehmbar angebracht ist, sowie Behälter (3) aufnimmt, die in Öffnungen (9) des Trägers (1) vorgesehen sind, wobei ein erster Behälter (31) in einer ersten Öffnung (91) des Trägers (1) eingeführt ist, wobei er somit die erste Öffnung (91) abdeckt, wobei ein zweiter Behälter (32) in einer zweiten Öffnung (92) des Trägers (1) eingeführt ist, wobei es somit die zweite Öffnung (92) abdeckt, wobei der erste Behälter (31) einen ersten ringförmigen Flansch (51) aufweist, der vorgesehen ist, um auf dem Träger (1) aufzuliegen, wobei der zweite Behälter (32) einen zweiten ringförmigen Flansch (52) aufweist, der vorgesehen ist, um auf dem Träger (1) aufzuliegen, wobei der erste ringförmige Flansch (51) in dem oberen Teil des ersten Behälters (31) ausgebildet ist, und wobei der zweite ringförmige Flansch (52) in dem oberen Teil des zweiten Behälters (32) ausgebildet ist, wobei eine erste Abdeckung (41) dem ersten Behälter (31) zugeordnet ist, **dadurch gekennzeichnet, dass** der Tank (2) ein verschlossenes Gehäuse (8) mit dem Träger (1) bildet, der die Behälter (3) trägt, die in den Öffnungen (9) eingeführt sind, dass das Gehäuse (8) verschlossen bleibt, wenn die erste Abdeckung (41) die zweite Öffnung (92) anstelle von dem zweiten Behälter (32) bedeckt, dass die zweite Öffnung (92) von einer zweiten oberen Rippe (82) umgeben ist, und dass die erste Abdeckung (41) aus einem flexiblen Material hergestellt ist und einen unteren ringförmigen Rand (21) aufweist, der vorgesehen ist, um die erste obere Rippe (82) zu umgeben und um den ersten ringförmigen Flansch (51) zu umgeben.

2. Vorrichtung zum Erwärmen von Lebensmitteln in getrennten Teilen nach Anspruch 1, **dadurch gekennzeichnet, dass** das Gehäuse (8) verschlossen ist, wenn ein zweiter Deckel (42), der dem zweiten Behälter (32) zugeordnet ist, die erste Öffnung (91) anstelle von dem ersten Behälter (31) bedeckt.

3. Vorrichtung zum Erwärmen von Lebensmitteln in getrennten Teilen nach Anspruch 2, **dadurch gekennzeichnet, dass** die erste Abdeckung (41) dem zweiten Behälter (32) zugeordnet werden kann, und dass die zweite Abdeckung (42) dem ersten Behälter (31) zugeordnet werden kann.

4. Vorrichtung zum Erwärmen von Lebensmitteln in getrennten Teilen nach einem der Ansprüche 1 bis 3, **dadurch gekennzeichnet, dass** der Träger zwei Greifer (11, 12) umfasst, die einander gegenüberliegend angeordnet sind.

5. Vorrichtung zum Erwärmen von Lebensmitteln in getrennten Teilen nach einem der Ansprüche 1 bis 4, **dadurch gekennzeichnet, dass** der erste Behälter (31) an dem Ort in der ersten Öffnung (91) sich unter dem Träger (1) erstreckt.

6. Vorrichtung zum Erwärmen von Lebensmitteln in getrennten Teilen nach einem der Ansprüche 1 bis 5, **dadurch gekennzeichnet, dass** die erste Öffnung (91) von einer ersten oberen Rippe (81) umgeben ist.

7. Vorrichtung zum Erwärmen von Lebensmitteln in getrennten Teilen nach Anspruch 6, **dadurch gekennzeichnet, dass** der erste ringförmige Flansch (51) dazu vorgesehen ist, auf der ersten oberen Rippe (81) aufzuliegen, und dass der zweite ringförmige Flansch (52) dazu vorgesehen ist, auf der zweiten oberen Rippe (82) aufzuliegen.

8. Vorrichtung zum Erwärmen von Lebensmitteln in getrennten Teilen nach einem der Ansprüche 6 oder 7, **dadurch gekennzeichnet, dass** die untere ringförmige Kante (21) vorgesehen ist, um die erste obere Rippe (81) zu umgeben.

9. Vorrichtung zum Erwärmen von Lebensmitteln in getrennten Teilen nach einem der Ansprüche 1 bis 8, **dadurch gekennzeichnet, dass** sie Heizmittel (6) aufweist, die dem Tank (2) zugeordnet sind.

10. Vorrichtung zum Erwärmen von Lebensmitteln in getrennten Teilen nach Anspruch 9, **dadurch gekennzeichnet, dass** die Heizmittel (6) Mitteln zur Temperaturregelung zugeordnet sind.

11. Vorrichtung zum Erwärmen von Lebensmitteln in getrennten Teilen nach einem der Ansprüche 1 bis 10, **dadurch gekennzeichnet, dass** es eine Hauptabdeckung (5) umfasst, die den Träger (1) abdeckt.

12. Vorrichtung zum Erwärmen von Lebensmitteln in getrennten Teilen nach Anspruch 11, **dadurch gekennzeichnet, dass** die Hauptabdeckung (5) auf dem Träger (1) aufliegt.

## Claims

1. Device for heating food products in separate portions comprising a bowl (2) receiving a support (1) that is mounted such that it can be removed, in addition to recipients (3) intended to be inserted into openings (9) made in the support (1), a first recipient (31) inserted into a first opening (91) in the support (1) thus covering said first opening (91), a second recipient (32) inserted into a second opening (92) in the support (1) this covering said second opening (92), the first recipient (31) comprising a first ring-shaped flange (51) designed to rest on the support (1), the second recipient (32) comprising a second ring-shaped flange (52) designed to rest on the support (1), the first ring-shaped flange (51) being formed in the upper part of the first recipient (31) and the second ring-shaped flange (52) being formed in the upper part of the second recipient (32), a first lid (41) being combined with the first recipient (31), **characterised in that** the bowl (2) forms a confined enclosure (8) with the support (1) bearing the recipients (3) inserted into the openings (9), **in that** the enclosure (8) remains confined when the first lid (41) covers the second opening (92) instead of the second recipient (32), **in that** the second opening (92) is surrounded by a second upper rib (82), and **in that** the first lid (41) is made from a flexible material and comprises a lower ring-shaped border (21) designed to surround the second upper rib (82) and to surround the first ring-shaped flange (51).

2. Device for heating food products in separate portions according to claim 1, **characterised in that** the enclosure (8) remains confined when a second lid (42) combined with the second recipient (32) covers the first opening (91) instead of the first recipient (31).

3. Device for heating food products in separate portions according to claim 2, **characterised in that** the first lid (41) can be combined with the second recipient (32), and **in that** the second lid (42) can be combined with the first recipient (31).

4. Device for heating food products in separate portions according to one of claims 1 to 3, **characterised in that** the support comprises two grasping members (11, 12) arranged opposite each other.

5. Device for heating food products in separate portions according to one of claims 1 to 4, **characterised in that** the first recipient (31) in position in the first opening (91) extends below the support (1).

6. Device for heating food products in separate portions according to one of claims 1 to 5, **characterised in that** the first opening (91) is surrounded by a first upper rib (81).

7. Device for heating food products in separate portions according to claim 6, **characterised in that** the first ring-shaped flange (51) is intended to rest on the first upper rib (81) and the second ring-shaped flange (52) is intended to rest on the second upper rib (82).

8. Device for heating food products in separate portions according to either claim 6 or 7, **characterised in that** the lower ring-shaped border (21) is designed to surround the first upper rib (81).

9. Device for heating food products in separate portions according to one of claims 1 to 8, **characterised in that** it comprises heating means (6) combined with the bowl (2).

10. Device for heating food products in separate portions according to claim 9, **characterised in that** the heating means (6) are combined with temperature control means.

11. Device for heating food products in separate portions according to one of claims 1 to 10, **characterised in that** it comprises a main lid (5) covering the support (1).

12. Device for heating food products in separate portions according to claim 11, **characterised in that** the main lid (5) rests on the support (1).
